# EUROPEAN PATENT SPECIFICATION

(11) **EP 1 501 719 B1**
(45) Date of publication and mention of the grant of the patent: **05.03.2008**
(21) Application number: 03721171.1
(22) Date of filing: 05.05.2003
(51) Int. Cl.: B63B 1/38

(54) **AIR CAVITY VESSEL WITH WEDGE-SHAPED CAVITIES, LONGITUDINALLY OFFSET CAVITIES, AND ROLL CONTROL MEANS AND METHOD FOR CONSTRUCTING THE SAME**
SCHIFF MIT KEILFÖRMIGEN VERTIEFUNGEN, IN LÄNGSRICHTUNG VERSETZTEN VERTIEFUNGEN UND VERFAHREN ZUM KONTROLLIEREN DER ROLLBEWEGUNG, SOWIE HERSTELLUNGSVERFAHREN HIERFÜR
BATEAU A COUSSIN D'AIR, A CAVITES CUNEIFORMES, A CAVITES DECALEES LONGITUDINALEMENT, ET MOYENS DE COMMANDE EN ROULIS ET PROCEDE DE CONSTRUCTION CORRESPONDANT

(30) Priority: 07.05.2002 EP 02076817; 10.07.2002 EP 02077798; 30.12.2002 EP 02080560
(43) Date of publication of application: 02.02.2005
(73) Proprietor: DK Group N.A. N.V., Curaçao (AN)
(72) Inventor: MATVEEV, Konstantin, Pasadena, CA 91106 (US); WINKLER, Jorn Paul, DK Group Netherlands B.V., NL-3012 NJ Rotterdam (NL)
(74) Representative: van Westenbrugge, Andries
(86) International application number: PCT/NL2003/000326
(87) International publication number: WO 2003/095297

(56) References cited:
- EP-A- 0 271 372
- FR-A- 2 638 692
- GB-A- 1 223 713
- GB-A- 2 009 677
- US-A- 3 595 191
- US-A- 3 742 888
- US-A- 5 146 863
- US-A- 5 456 201
- US-A- 5 570 650
- US-A- 5 746 146
- US-B1- 6 167 829
- US-B1- 6 293 216

## Description

The invention relates to an air cavity vessel comprising a hull with a bow, a stem and a propeller near the stern, at least two open cavities being formed at the bottom of the hull, the cavities being adjacent in the length direction, each cavity being enclosed by a two side walls extending in a length direction of the vessel, a rear wall and a front wall, the rear wall comprising a downwardly sloping wall part, when going in a rearward direction, and air injection means for supplying air into the cavity.

The invention also relates to a method of constructing an air cavity vessel.

Such an air cavity vessel is known from US-A- 3,595,191 in which the bottom of the hull of a large ocean going vessel, such as an oil tanker, is provided with a number of downwardly opening air cavities into which compressed air is introduced. Hereby the water contact surface of the vessel is reduced and its hydrodynamic properties are improved, such as for instance a reduction of water resistance. In the air cavities a wave pattern is generated, which is influences the vessels hydrodynamic performance.

From US-A-3,742,888 a multiple chamber air cushion boat hull is disclosed in which a foremost air cavity is formed and adjacent in the length direction a rear air cavity. The rear wall of the foremost air cavity is formed by a sloping divider wall and a substantially vertical rear divider wall part. The divider wall parts and side skegs or pontoons are formed as an integral hull part of a solid hull material. This implies that the bottom of the vessel will have to be constructed from light weight materials such as fibre reinforced plastics which render construction for water vessels such as bulk carriers or tanker vessels unsuitable. The air inlet for injecting pressurized air into the cavity is loacted in the sidewalls of the cavities. This provides an air flow pattern which is less suitable for larger vessels sailing at relatively low speeds.

It is therefore an object of the invention to provide an air cavity vessel in which the air cavities are shaped to generate a wave pattern resulting in a stable sea going and reduced water resistance. It is in particular an object of the present invention to provide an air cavity vessel such as a bulk carrier, a container vessel or tanker vessel on large passenger vessels, i.e. ocean-going vessels of 50,000 tons or more, preferably 100,000 tons or more having a reduced pressure drag and requiring relatively low air pressures and/or low volumes to fill the cavities with air, at speeds below 30 knots.

It is a further object of the present invention to provide an air cavity vessel, which comprises cavities, which may be formed in a relatively easy manner. It is again an object of the present invention to provide an air cavity vessel, in which the cavities may be provided in the hull of an existing vessel.

It is again an object of the invention to provide an air cavity vessel which has stabilised roll motion.

Hereto an air cavity vessel according to a first embodiment of the present invention, is characterised in that at least one of the front and rear walls comprises a first plate-shaped wall part being with an upper transverse side connected to the bottom of the vessel, and being with its longitudinal sides connected to a respective side wall, a lower transverse side being located at a distance from the hull bottom and being connected to a second plate-shaped wall part, the second wall part being connected to the side walls and to the bottom of the hull or to a wall part of an adjacent cavity, the first and second wall parts enclosing a wedge-shaped, closed space, wherein the air injection means comprise an opening in the second wall part of the front wall for injection air into the cavity substantially in the direction of the rear wall.

Air injection from the front wall in the length direction of the cavity provides for a stable low-turbulence air flow and reduced friction drag. In a particular embodiment, the second wall part of the front wall extends at an angle less than 90° to the hull bottom.

The sloping front and rear wall geometry will allow a wave to fit, at the design speed range of the vessel, into the cavities, the wave crest being located at or near the upper transverse edge of the second plate-shaped wall part, the wave shape being deflected downwardly and following the sloping rear wall part. This applies especially to ocean-going cargo vessels or large passenger vessels of volumes of 1000 tons or more, at speeds of 9-30 knots. By properly accommodating the wave shapes in the cavities, it was found that a shock-free cavity closure is achieved and that a large drag reduction occurs, while at the same time the air injection can be reduced, resulting in a power saving. Furthermore, the cavity of the present invention can be relatively easily constructed from plate-shaped parts, in a shipyard, and can be fitted to a newly built vessel, but can also be used to retrofit existing vessels, by attaching the side walls and transverse walls to the bottom of an existing hull.

The length of the wedge-shaped rear wall may be between 1 and 0.1 times the length of the cavity, preferably between 0.5 and 0.1 times the length of the cavity.

In one embodiment, two cavities are placed one behind the other. The front wall of the rearmost cavity is formed by the plate-shaped second wall part of the frontmost cavity that attaches along a smooth transition to the first plate-shaped wall part of the foremost cavity. Hereby, flow separation along the lowermost part of the wedge-shaped cavity closure is prevented.

In another embodiment of an air cavity vessel of the present invention, at least a first and a second cavity are located side by side in a transverse direction, wherein the front and rear walls of the first cavity are located at a different position in the length direction form the front and rear walls of the second cavity.

It was found that in the cavities, a wave pattern is generated which is similar to the wave pattern outside the hull of the vessel. The wave pattern in the cavities is not purely transversely directed, but was found to be oblique. By using an offset position of the air cavities which in the transverse direction lie side by side, an interference between the wave systems within cavities can be obtained such that the vessel's resistance is decreased. By the longitudinally offset air cavities, the wave pattern outside the hull of the vessel is improved such as to further reduce the vessel's resistance.

In a further embodiment of an air cavity vessel according to the present invention, roll control means are provided, comprising a roll angle detector, an individually controllable air supply to a cavity on a respective side of the longitudinal centre line, such that upon tilting of the vessel in a tilt direction around the longitudinal centre line, one cavity being raised and one cavity being lowered, the angle detector generates a control signal for increasing the air supply to the cavity which is raised.

In this way, an active dampening system to reduce the ship motions (roll, pitch and yaw) during seagoing is provided. In particular, roll restoring moments may be created to correct a static angle of heel due to wind forces, thus enabling an optimal functioning of the air cavity system.

A non-limiting embodiment of an air cavity vessel according to the present invention will be explained in detail, by way of example, with reference to the accompanying drawings. In the drawings:
Fig. 1 shows a side view of a tanker or bulk carrier vessel comprising air cavities, and an air deflector according to the present invention,
Fig. 2 shows a bottom view of the vessel of Fig.1,
Fig. 3 shows a cross-sectional view of the air deflector along line III-III in Fig. 2,
Fig. 4 shows a perspective view of two adjacent air cavities comprising wedge-shaped front and rear walls,
Fig. 5-8 show a schematic side view of different embodiments of air cavities;
Fig. 9 shows a combined top and bottom plan view of a vessel comprising air cavities that are offset in the length direction,
Fig. 10 shows a schematic transverse cross section of an air cavity vessel with a roll control device, and
Fig. 11 shows an air cavity vessel in which the cavities are formed in a double hull construction.

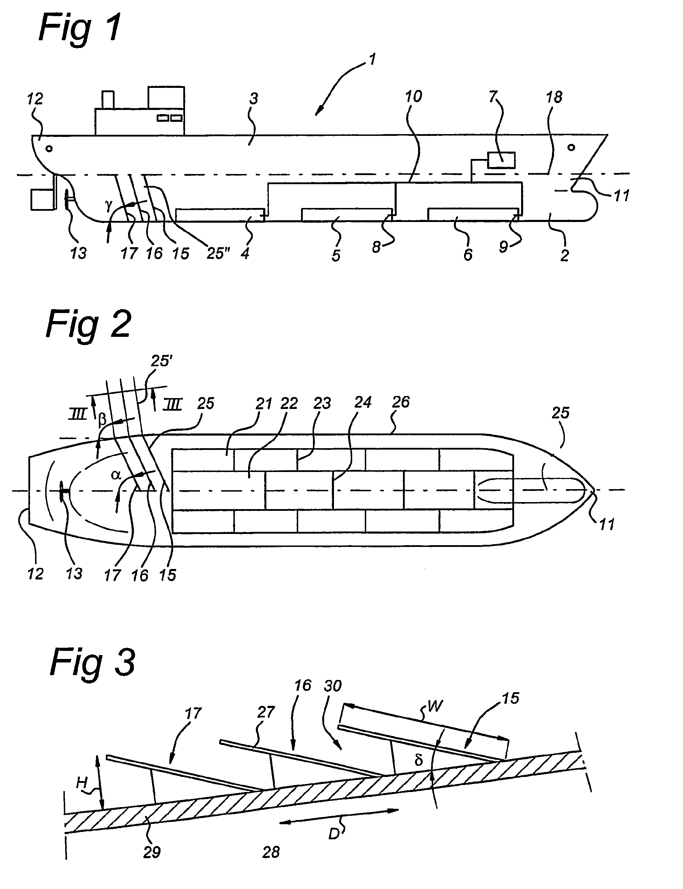

In Fig. 1 an oil tanker or bulk carrier 1 is shown, which may have a tonnage of for instance between 50.000 and 500.000 ton. At the bottom 2 of the hull 3, the vessel comprises a number of air cavities 4, 5, 6, which are open at their downward facing surfaces. Via a compressor 7, compressed air is injected into the cavities 4-6 via a series of ducts 10. The air is injected through openings in the front walls 8, 9 of the cavities in the length direction of the vessel 1, in the cavitation area for low-turbulence air flow. Each cavity may have a length of about 0.5 - 30 m, a width of about 0.5 - 20 m and a depth of about 0.3 - 5 m. The height of the cavities is such that at maximum trim the cavities are still completely filled with air, and will in general correspond with the height of a computed wave crest inside the cavity. The width of the cavities is such that at least three rows of cavities extend side by side in the length direction of the vessel. The length Lc of the cavities of a slow sailing non-fin-stabilised monohull vessel at design speed v of the vessel may be given by Lc = 0.34 v².

The air is supplied at a pressure of 1.5 - 4 bar, and is slightly larger than the hydrostatic pressure in the cavity at the corresponding draught of the vessel. The rate of the air supply is such as to keep each cavity as dry as possible under the given conditions (speed, sea state. etc.), and will be trapped in a stable situation in each air cavity, excess air escaping from the rear parts of each cavity.

At the bow 11 the vessel 1 comprises a bulbous portion, reducing water resistance. At the stem 12, a submerged, non-ventilated propeller 13 drives the vessel at speeds of between 8 and 30 knots, preferably between 13 and 17 knots. Near the stem 13, between the rearmost air cavity 4 and the propeller 13, three parallel air deflectors 15,16,17 extend along the outside surface of the hull, obliquely in a rearward direction at an angle γ with the horizontal, for guiding air escaping from the cavities 4-6, parallel to the deflectors, from the bottom 2 towards the water surface 18. This prevents air from entering into the propeller plane and keeps the air level at the propeller 13 lower than for instance 10% by volume. In this way, no special design modifications to the propeller need to be made, which is of advantage when the air cavities 4-6 are retrofitted onto an existing vessel.

As can be seen in Fig. 2, three air cavities 21, 22 extend side by side at the bottom of the vessel, wherein the transverse partitions 23, 24 of the outer and inner cavities are offset in the direction of longitudinal centre line 25 for optimum wave shaping in the cavities. The transverse partitions 23,24 may be of wedge-shaped cross-section, the depth of each cavity gradually varying at the front and the rear of each cavity.

Between the rearmost cavities 21 and the propeller 13, the three wedge-shaped air deflectors 15, 16,17 extend at an acute angle α of for instance 80° - 110° with the longitudinal centre line 25, towards the tanging line 26, which is formed by the boundary of the substantially horizontal bottom part of the hull 1. In Fig. 2, the lower part 25 and intermediate part 25' of the air deflectors on only one side of the vessel are shown, while in actual fact the air deflector layout is symmetrical about the longitudinal centre line 18. From the tanging line 26, the air deflectors 15-17 extend with their intermediate parts 25' at an angle β with the longitudinal direction, along the sides of the hull, for instance up to water level 18. The angle β depends on the design speed of the vessel and the upward velocity of air bubbles in water. The upper parts 25" of the air deflectors 15-17 extends at an angle γ to the vertical, as can be seen in Fig. 1. The angles α, β and γ depend on the vessel design, such as the design speed and the air escape angle at the design speed and are laid out to guide the air bubbles to the surface without a transverse acceleration.

As can be seen from Fig. 3, the air deflectors 15-17 comprise a wedge shaped cross section, and are formed by a sloping strip 27 and a transverse strip 28, which are welded to the wall 29 of the hull 3. The width W of each strip may be 0.3 - 3 m while the height h of the rearmost part above the hull wall 29 is determined by the average amount of air escaping from the last cavity and may be 0.1 - 2 m, whereas the distance D between the deflectors may be 0.1 - 10 m and the angle δ with the hull wall 29 is 10° - 90°.

At the rear ends 30 of the air deflectors 15-17 a low-pressure zone is formed, in which air bubbles are trapped. The trapped air is guided in the low-pressure zone, along the deflectors, from the bottom 2 to the sea surface 18, such that air ingress into the zone of propeller 13 is prevented.

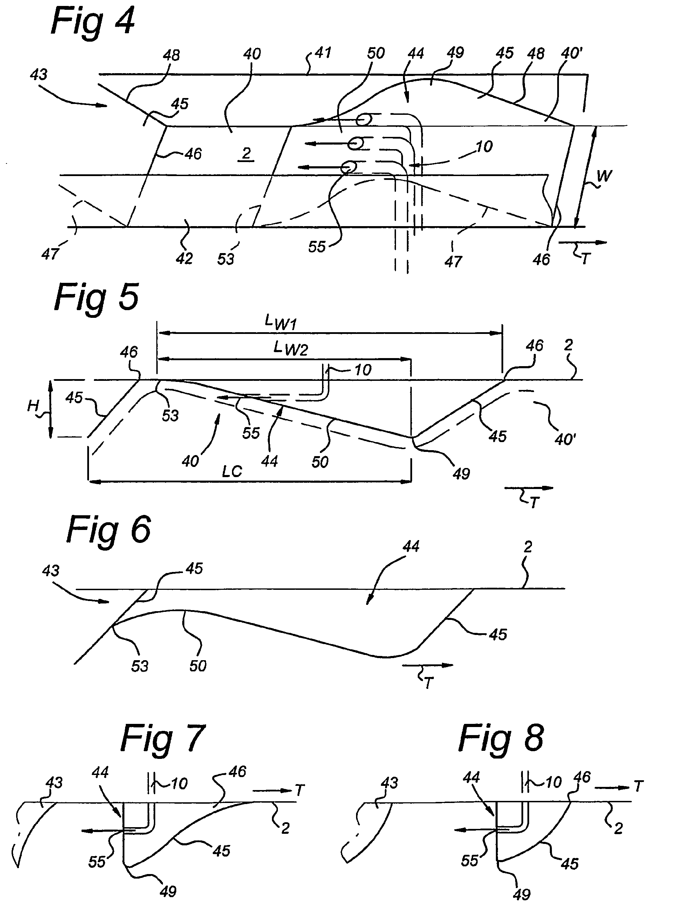

Fig. 4 shows a schematic view of a cavity 40, the vessel being shown in a position in which the bottom 2 faces upward, wherein the bow of the vessel is located to the right hand side of Fig. 4, the direction of sailing being indicated with arrow T. The cavity 40 is bounded by plate-shaped side walls 41, 42, a wedge-shaped front wall 44 and a wedge-shaped rear wall 43. The front and rear walls 43, 44 each comprise a plate shaped wall part 45, which is connected with its lower transverse side 46 to the bottom 2 of the hull 3 .The wall part 45 is inclined and extends away from the bottom 2. The longitudinal sides 47, 48 of the wall part 45 are connected, for instance by welding, to the side walls 41, 42. Along upper transverse edge 49, the first wall part 45 is connected to a second wall part 50, which comprises a sloping plane and which is with its lower edge 53 connected to the bottom 2. The transition of the wall part 45 to the wall part 50 along edge 49 and of wall part 50 to the bottom 29 along edge 53 should be gradual to prevent flow separation along edges 49 and 53. A wedge-shaped, enclosed box structure 44 is formed by the first and second wall parts 45, 50. The air supply ducts 10 enter into the cavity 40 via holes 55 in the plate-shaped wall part 50 and are accommodated inside the box-shaped structure enclosed by the wall 44.

Fig. 5 shows a schematic side view of air cavity 40. The pattern of a wave, which is situated in the cavity 40, is such that the wave peak is located near the lower transverse edge 53 of wedge-shaped front wall 44 and will then be deflected by the wall part 45, as shown by the dotted line in Fig. 5. The wedge-shape of the box-like front and rear walls 43, 44 of the air cavity 40, 40' is such that an optimal flow is obtained and a shock-free cavity closure, i.e. that pressure drag phenomena are strongly reduced. The cavity shape and air inlet position 55 according to the present invention requires relatively little airflow to maintain the cavity filled with air as it achieves a high degree of drag reduction at low air injection levels.

The Length L_{W1} of the wedge-shaped wall 44 may for instance be about 10 m, at a dept H of the cavity 40 (height of the side walls 41,42) of 1 m. The length L_{W2} of he second wall part 50 may be about 7 m, whereas the length L_{c} of the cavity 40 is about 10 m. The width W (see Fig. 4) of the cavity 40 may be about 4 m.

Fig. 6 shows an embodiment in which the curved second wall part 50 of frontmost wedge-shaped wall 44 attaches to the sloping wall part 45 of rearward wedge-shaped wall 43. Such a cavity construction is best suitable for operation in calm waters in contrast to the cavity shown in Fig. 5 in which wall part 50 attaches along its lower edge 53 to the bottom 2, rendering the cavity more suitable for operation in rough waters, such as at sea.

As shown in Fig. 7, the second wall part 50 is placed vertically, the wall part 45 having near the bottom 2 and near the edge 49 a generally horizontal orientation. The air inlet 55 of air supplyduct 10 injects air in the direction of the schematic arrow, and is situated in the cavitation area of the cavity.

In the embodiment of Fig. 8, the wall part 45 has a convex shape in contrast to the concave wall part 45 of Fig. 7. Different designs are possible according to the intended operation speed and water conditions (with or without waves, in the absence or presence of strong winds or currents etc).

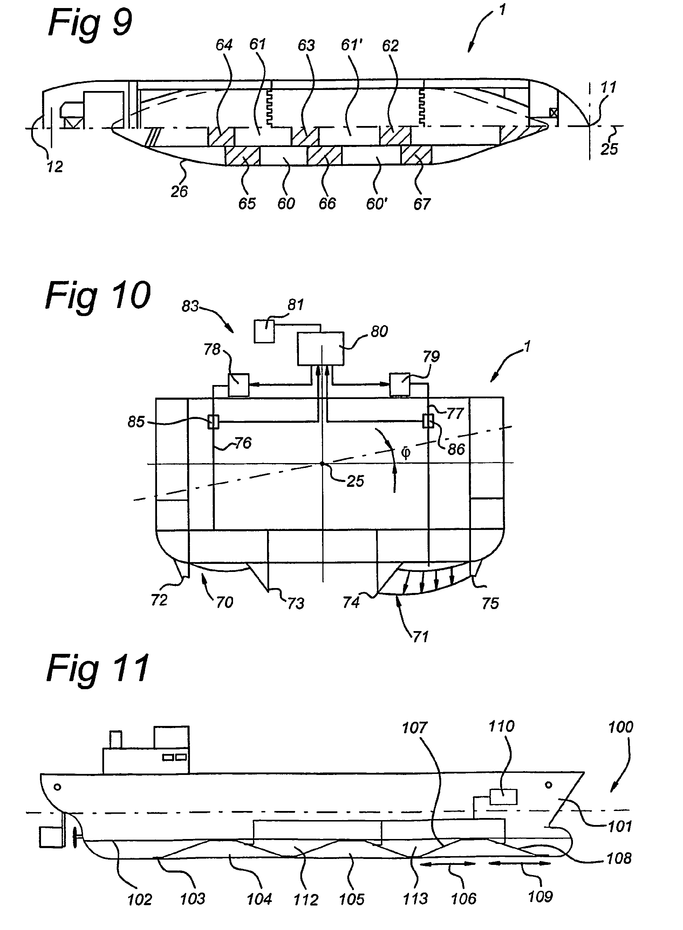

Fig. 9 shows a vessel 1, in both top view and bottom view, from which it can be seen that the two rows of air cavities 60, 60', 61, 61' extend side by side in the length direction of the vessel. The wedge shaped walls 62,63,64 of the cavities 61, 61' are located at different locations along the longitudinal centre line 25 than the wedge shaped walls 65, 66 and 67 of the cavities 60, 60'. In this way, the oblique wave pattern in the cavities is optimised to lower the vessel's water resistance.

Fig. 10 shows a vessel 1 of the present invention, comprising a roll control means 83. Cavities 70, 71 are located on respective sides of the longitudinal centreline 25 and connect via air ducts 76, 77 to compressors 78, 79. The compressors are controlled by a computer 80, which receives as an input a detector signal generated by angle detector 81. By controlling the amount of air introduced into each cavity 70, 71, not only optimal performance in every operational condition may be obtained, but also a dampening system for the ship's motions in seaways is provided and roll restoring moments may be generated.

In the upright position at zero inclination, the air is trapped between the side walls, or skegs 72, 73 and 74, 75 of the cavities 70, 71 in a like manner, and the air supply through ducts 76, 77 is regulated by the computer 80 on the basis of speed, loading and environmental conditions. To prevent a sudden drop in cavity pressure by escape of air, airflow monitors 85, 86 may be incorporated into ducts 76,77 for detecting such a pressure drop. In response to a pressure drop, the respective compressor 78,79 may be stepped up to provide for a rapid pressure build up in the respective cavity.

When the vessel is inclined, for instance through heel angle ϕ, the cavity 71 is raised. For small angles of heel, such as 5 degrees, the angle of heel of the cavity walls 74, 75 is expected to incline by a similar amount. The angle detector 81 generates a detector signal in response to the inclination, such that the computer 80 activates compressor 79, and the pressure in cavity 71 is increased. As the height of the side wall 74 is larger than the height of side wall 75, larger amounts of air will be supplied to the inner cavity area upon listing of the vessel. The increase in volume of the cavity 71 causes the centre of buoyancy of the vessel to move towards the side to which is the vessel is heeled (to the left-hand side in this figure) which causes a restoring moment restoring the vessel to its upright position. The computer 80 controls during uprighting the air supply to the cavity 71 to remove the extra air in the cavity 71, optionally through duct 77, before the vessel reaches its zero heel position to avoid "overshoot angles" in the opposite direction.

Instead of a roll angle detector 81, a second order detector may be used which measures the roll accelerations. The roll control system of the present invention will provide a roll stabilisation without significantly increasing the ship's resistance, such as is the case when for instance stabiliser fins are used.

The air cavity system and roll control system may be built into new ships or may be fitted to existing ships with displacement hulls.

Figure 11 shows a double hull tanker vessel 100 having an inner hull 102 and an outer hull 103. The outer hull has been cut to form air cavities 104, 105. Partitioning walls 112, 113 have been welded as plate-shape parts to the inner hull 102 which forms the bottom of air cavities 104, 105. Part 106 of the outer hull 103 may be used to form wall part 107 of partitioning wall 113. Outer hull part 109 may be cut and then subsequently welded to inner hull 102 to for partitioning part 108 of the foremost air cavity. Upon completion of the air cavities, a compressor 110 may be added to the double hull vessel 100 which is connection via an air duct 115 to the respective air cavities for air supply thereto. With the method according to the present invention existing double hull vessels may be converted into air cavity vessels, to reduce friction and drag phenomena and hence obtain savings in energy consumption for propulsion in an easy and cost effective manner.

## Claims

1. Air cavity vessel (1) comprising a hull (3) with a bow (11), a stem (12) and a propeller (13) near the stern, at least two open cavities (4,5,6) being formed at the bottom (29) of the hull, the cavities being adjacent in the length direction, each cavity being enclosed by a two side walls (41, 42) extending in a length direction of the vessel, a rear wall (43) and a front wall (44), the rear wall comprising a downwardly sloping wall part, when going in a rearward direction, and air injection means (7,10) for supplying air into the cavity, **characterised in that** at least one of the front and rear walls (43, 44) comprises a first plate-shaped wall part (45) being with an upper transverse side (46) connected to the bottom (29) of the vessel, and being with its longitudinal sides (47, 48) connected to a respective side wall (41, 42), a lower transverse side (49) being located at a distance from the hull bottom (29) and being connected to a second plate-shaped wall part (50), the second wall part (50) being connected to the side walls (41, 42) and to the bottom (29) of the hull or to a wall part of an adjacent cavity, the first and second wall parts (45, 50) enclosing a wedge-shaped, closed space, wherein the air injection means (7, 10) comprise an opening (55) in the second wall part (50) of the front wall (44) for injecting air into the cavity substantially in the direction of the rear wall (43).

2. Air cavity vessel according to claim 1, wherein the second wall part extends at an angle less than 90° to the hull bottom (29).

3. Air cavity vessel according to claim 2, wherein the length of the length (L_{w2}) of the second wall parts (50) in the length direction is between 1 and 0.1 preferably between 0.5 and 0.1 times the length (L_{c}) of the cavity, most preferably between 0.3 and 0.2 times the length of the cavity.

4. Air cavity vessel according to claim 1, 2 or 3, wherein for the at least two cavities (40, 40') that are adjacent in the length direction, the second wall part of the foremost cavity comprises a sloping plane (50) attaching along a smooth transition (49) to the first plate shaped wall part (45).

5. Air cavity vessel according to any of the preceding claims, wherein at least thre cavities (60, 61) are located side by side in a transverse direction, wherein the front and rear walls (65, 66) of the first cavity (60) are located at a different position in the length direction form the front and rear walls (63, 64) of the second cavity (61).

6. Air cavity vessel according to any of the preceding claims, a cavity being provided on each side of the longitudinal centre line, **characterised by** roll control means, comprising a roll detector, an individually controllable air supply to each cavity, upon tilting of the vessel in a tilt direction one cavity being raised and one cavity being lowered, the roll detector generating a control signal for increasing the air supply to the cavity which is raised.

7. Air cavity vessel comprising a hull (3) with a bow (11) and a propeller (13) near the stern, at least a first and a second open cavity (60,61) being formed at the bottom (2) of the hull, located side by side in a transverse direction, the cavities being enclosed by two side walls extending in a length direction of the vessel, a rear wall and a front wall, and air injection means (7,10) for supplying air into the cavity, **characterised in that**, a midpoint position of the first cavity (60) located halfway between the front and the rear walls (65,66) of said first cavity (60) is situated at a different position along the length direction than a midpoint position of the second cavity (61) that is located halfway between the front and rear walls (63,64) of the second cavity (61).

8. Air cavity vessel (1) comprising a hull (3) with a bow (11), a stem (12) and a propeller (13) near the stern, on each side of a longitudinal centre line at least one open cavity (4, 5, 6) being formed at the bottom (2) of the hull, the cavity being enclosed by a two side walls extending in a length direction of the vessel, a rear wall and a front wall, the rear wall comprising a downwardly sloping wall part, when going in a rearward direction, and air injection means (7, 10) for supplying air into the cavity, **characterised by** roll control means (83), comprising a roll detector, an individually controllable air supply to each cavity, upon tilting of the vessel in a tilt direction one cavity being raised and one cavity being lowered, the roll detector generating a control signal for increasing the air supply to the cavity which is raised.

9. Method of constructing an air cavity vessel (1) according to claim 1 comprising the steps of:
- providing a vessel (1) with a hull (3) and a bottom (29), and
- connecting the side walls (41, 42) and the front and rear walls (43, 44) to the bottom (29).

10. Method for constructing an air cavity vessel (100) comprising a double hull with an outer hull part (103) and an inner hull part (102), a bow and a stem and a propeller near the stern, at least one open cavity (104,105) being formed at the bottom of the hull, **characterised in that**:
- the outer hull part (103) is at least partially removed,
- at least two cavities adjacent in the length direction of the vessel are formed, each cavity being enclosed by two side walls, a front wall and a rear wall of plate-shaped material, such that the inner hull part (102) forms the bottom of each cavity, and
- an air injection means is provided connected to the cavities for supplying air into the cavities.

11. Method according to claim 10, wherein at least parts (106, 109) of the outer hull (103) are used for constructing one or more of the sidewalls and front and rear walls of the cavities.

## Patentansprüche

1. Luftkavitätswasserfahrzeug (1) umfassend einen Rumpf (2) mit einem Bug (3), einem Heck (12) und einem Propeller (13) in der Nähe des Hecks, zumindest zwei offenen Kavitäten (4, 5, 6), welche an dem Boden (29) des Rumpfes eingeformt sind, wobei die Kavitäten in der Längsrichtung benachbart liegen, wobei jede Kavität durch zwei Seitenwände (41, 42), welche sich in einer Längsrichtung des Wasserfahrzeuges erstrecken, eine Rückwand (43) und eine Vorderwand (44) eingeschlossen ist, wobei die Rückwand einen sich abwärts geneigten Wandteil, wenn in eine Rückwärtsrichtung gegangen wird, und Lufteinblasmittel (7, 10) zum Zuführen von Luft in die Kavitätumfasst, **dadurch gekennzeichnet, dass** zumindest eine der Vorder- und Rückwände (43, 44) einen ersten plattenförmigen Wandteil (45) umfasst, welcher mit einer oberen Querseite (46) mit dem Boden (29) des Wasserfahrzeuges verbunden ist und welcher mit seinen Längsseiten (47, 48) mit einer jeweiligen Seitenwand (41, 42) verbunden ist, wobei eine untere Querseite (49) in einem Abstand von dem Rumpfboden (29) angeordnet ist und mit einem zweiten plattenförmigen Wandteil (50) verbunden ist, wobei der zweite Wandteil (50) mit den Seitenwänden (41, 42) und mit dem Boden (49) des Rumpfes oder einem Wandteil einer danebenliegenden Kavität verbunden ist, wobei die ersten und zweiten Wandteile (45, 50) einen keilförmigen, abgeschlossenen Raum einschließen, wobei die Lufteinblasmittel (7, 10) eine Öffnung (55) in dem zweiten Wandteil (50) der Vorderwand (44) zum Einblasen von Luft in die Kavität im Wesentlichen in der Richtung der Rückwand (43) umfassen.

2. Luftkavitätswasserfahrzeug gemäß Anspruch 1, wobei sich der zweite Wandteil in einem Winkel von weniger als 90° zum Rumpfboden (29) erstreckt.

3. Luftkavitätswasserfahrzeug gemäß Anspruch 2, wobei die Länge der Länge (L_{W2}) des zweiten Wandteils (50) in der Längsrichtung zwischen 1 und 0,1, bevorzugt zwischen 0,5 und 0,1 Mal der Länge (L_{c}) der Kavität ist, bevorzugt zwischen 0,3 und 0,2 Mal der Länge der Kavität.

4. Luftkavitätswasserfahrzeug gemäß Anspruch 1, 2 oder 3, wobei für zumindest zwei Kavitäten (40, 40'), welche in der Längsrichtung benachbart liegen, der zweite Wandteil der vordersten Kavität eine geneigte Ebene (50) umfasst, welche entlang eines sanften Überganges (49) an dem ersten plattenförmigen Wandteil (45) anliegt.

5. Luftkavitätswasserfahrzeug gemäß einem der vorstehenden Ansprüche, wobei zumindest drei Kavitäten (60, 61) Seite-an-Seite in einer Querrichtung angeordnet sind, wobei die Vorder- und Rückwände (65, 66) der ersten Kavität (60) in einer in der Längsrichtung unterschiedlichen Position bezüglich der Vorder- und den Rückwände (63, 64) der zweiten Kavität (61) angeordnet sind.

6. Luftkavitätswasserfahrzeug gemäß einem der vorstehenden Ansprüche, wobei eine Kavität an jeder Seite der Längsmittellinie vorgesehen ist, **gekennzeichnet durch** Rollsteuerungsmittel, umfassend einen Rolldetektor, eine individuell steuerbare Luftzufuhr für jede Kavität, wobei beim Neigen des Wasserfahrzeuges in einer Neigungsrichtung eine Kavität angehoben wird und eine andere Kavität abgesenkt wird, wobei der Rolldetektor ein Steuersignal zum Erhöhen der Luftzufuhr zu der Kavität, welche angehoben ist, erzeugt.

7. Luftkavitätswasserfahrzeug umfassend einen Rumpf (3) mit einem Bug (11) und einem Propeller (13) nahe des Hecks, zumindest eine erste und eine zweite offene Kavität (60, 61), welche an dem Boden (2) des Rumpfes eingeformt sind, wobei sie Seite-an-Seite in einer Querrichtung angeordnet sind, wobei die Kavitäten durch zwei Seitenwände, welche sich in einer Längsrichtung des Wasserfahrzeuges erstrecken, eine Rückwand und eine Vorderwand eingeschlossen sind, und Lufteinblasmittel (7, 10) zum Zuführen von Luft in die Kavität, **dadurch gekennzeichnet, dass** in einer Mittelpunktsposition der ersten Kavität (60), welche auf halbem Weg zwischen den Vorder- und Rückwänden (65, 66) der ersten Kavität (60) angeordnet ist, in einer entlang der Längsrichtung unterschiedlichen Position angeordnet ist, bezüglich einer Mittelpunktsposition der zweiten Kavität (61), welche auf dem halben Weg zwischen den Vorder- und Rückwänden (63, 64) der zweiten Kavität (61) angeordnet ist.

8. Luftkavitätswasserfahrzeug (1), umfassend einen Rumpf (3) mit einem Bug (11), einem Heck (12) und einem Propeller (13) in der Nähe des Hecks, wobei auf jeder Seite einer sich längs erstreckenden Mittellinie zumindest eine offene Kavität (4, 5, 6) an dem Boden (2) des Rumpfes ausgeformt ist, wobei die Kavität durch zwei Seitenwände, welche sich in einer Längsrichtung des Wasserfahrzeuges erstrecken, eine Rückwand und eine Vorderwand eingeschlossen ist, wobei die Rückwand einen sich abwärts neigenden Wandteil, wenn in eine Rückwärtsrichtung gegangen wird, und Lufteinblasmittel (7, 10) zum Zuführen von Luft in die Kavität umfasst, **gekennzeichnet durch** ein Rollsteuerungsmittel (83), umfassend einen Rolldetektor, eine individuell steuerbare Luftzufuhr zu jeder Kavität, wobei beim Neigen des Wasserfahrzeugs in eine Neigungsrichtung eine Kavität angehoben wird und eine andere Kavität abgesenkt wird, wobei der Rolldetektor ein Steuersignal zum Erhöhen der Luftzufuhr zu der Kavität, welche angehoben ist, erzeugt.

9. Verfahren zum Konstruieren eines Luftkavitätswasserfahrzeuges (1) gemäß Anspruch 1, umfassend die Schritte:
- Bereitstellen eines Wasserfahrzeuges (1) mit einem Rumpf (3) und einem Boden (29), und
- Verbinden der Seitenwände (41, 42) und der Vorder- und Rückwände (43, 44) mit dem Boden (29).

10. Verfahren zum Konstruieren eines Luftkavitätswasserfahrzeuges (100) umfassend einen Doppelrumpf mit einem äußeren Rumpfteil (103) und einem inneren Rumpfteil (102), einem Bug und einem Heck und einem Propeller in der Nähe des Hecks, wobei zumindest eine offene Kavität (104, 105) am Boden des Rumpfes eingeformt ist, **dadurch gekennzeichnet, dass**:
- der äußere Rumpfteil (113) zumindest teilweise entfernt wird;
- zumindest zwei Kavitäten benachbart in der Längsrichtung des Wasserfahrzeuges eingeformt sind, wobei jede Kavität durch zwei Seitenwände, eine Vorderwand und eine Rückwand aus plattenförmigem Materialeingeschlossen wird, so dass der innere Rumpfteil (102) den Boden einer jeden Kavität ausformt, und
- ein Lufteinblasmittel bereitgestellt wird, welches mit den Kavitäten verbunden ist, um den Kavitäten Luft zuzuführen.

11. Verfahren gemäß Anspruch 10, wobei zumindest Teile (106, 109) des äußeren Rumpfes (103) zum Konstruieren einer oder mehrerer der Seitenwände und der Vorder- und Rückwände der Kavitäten verwendet werden.

## Revendications

1. Bateau à cavités d'air (1) comprenant une coque (3) avec une proue (11), une poupe (12) et une hélice (13) à proximité de la poupe, au moins deux cavités ouvertes (4, 5, 6) étant formées au fond (29) de la coque, les cavités étant adjacentes dans la direction de la longueur, chaque cavité étant entourée par deux parois latérales (41, 42) s'étendant dans une direction de la longueur du bateau, une paroi arrière (43) et une paroi avant (44), la paroi arrière comprenant une partie de paroi en pente inclinée vers le bas, en allant dans une direction vers l'arrière, et un dispositif d'injection d'air (7, 10) pour alimenter la cavité en air, **caractérisé en ce qu'**au moins une des parois avant et arrière (43, 44) comprend une première partie de paroi en forme de plaque (45) étant, par l'intermédiaire d'un côté transversal supérieur (46), raccordée au fond (29) du bateau et étant, par l'intermédiaire de ses côtés longitudinaux (47, 48), raccordée à une paroi latérale respective (41, 42), un côté transversal inférieur (49) étant situé à distance du fond de la coque (29) et étant raccordé à une seconde partie de paroi en forme de plaque (50), la seconde partie de paroi (50) étant raccordée aux parois latérales (41, 42) et au fond (29) de la coque ou à une partie de paroi d'une cavité adjacente, les première et seconde parties de paroi (45, 50) entourant un espace fermé en forme de coin, dans lequel le dispositif d'injection d'air (7, 10) comprend une ouverture (55) dans la seconde partie de paroi (50) de la paroi avant (44) pour injecter de l'air dans la cavité sensiblement dans la direction de la paroi arrière (43).

2. Bateau à cavités d'air selon la revendication 1, dans lequel la seconde partie de paroi s'étend selon un angle inférieur à 90° par rapport au fond de la coque (29).

3. Bateau à cavités d'air selon la revendication 2, dans lequel la longueur de la longueur (L_{w2}) de la seconde partie de paroi (50) dans la direction de la longueur se situe entre 1 et 0,1, de préférence entre 0,5 et 0,1 fois la longueur (L_{c}) de la cavité, et de manière préférée entre toutes entre 0,3 et 0,2 fois la longueur de la cavité.

4. Bateau à cavités d'air selon les revendications 1, 2 ou 3, dans lequel pour les au moins deux cavités (40, 40') qui sont adjacentes dans la direction de la longueur, la seconde partie de paroi de la cavité la plus en avant comprend un plan en pente (50) se fixant le long d'une transition en douceur (49) à la première partie de paroi en forme de plaque (45).

5. Bateau à cavités d'air selon l'une quelconque des revendications précédentes, dans lequel au moins les cavités (60, 61) sont situées côte à côte dans une direction transversale, dans lequel les parois avant et arrière (65, 66) de la première cavité (60) sont situées au niveau d'une position différente dans la direction de la longueur depuis les parois avant et arrière (63, 64) de la seconde cavité (61).

6. Bateau à cavités d'air selon l'une quelconque des revendications précédentes, une cavité étant disposée de chaque côté de la ligne centrale longitudinale, **caractérisé par** un dispositif de contrôle du roulis, comprenant un détecteur de roulis, une alimentation en air à commande individuelle pour chaque cavité, lors de l'inclinaison du bateau dans une direction d'inclinaison une cavité étant élevée et une cavité étant abaissée, le détecteur de roulis générant un signal de commande afin d'augmenter l'alimentation en air vers la cavité qui est élevée.

7. Bateau à cavités d'air comprenant une coque (3) avec une proue (11) et une hélice (13) à proximité de la poupe, au moins une première et une seconde cavités ouvertes (60, 61) étant formées au fond (2) de la coque, situées côte à côte dans une direction transversale, les cavités étant entourées par deux parois latérales s'étendant dans une direction de la longueur du bateau, une paroi arrière et une paroi avant, un dispositif d'injection d'air (7, 10) pour alimenter la cavité en air, **caractérisé en ce qu'**une position médiane de la première cavité (60) située à mi-distance entre les parois avant et arrière (65, 66) de ladite première cavité (60) est située au niveau d'une position différente le long de la direction de la longueur d'une position médiane de la seconde cavité (61) qui est située à mi-distance entre les parois avant et arrière (63, 64) de la seconde cavité (61).

8. Bateau à cavités d'air (1) comprenant une coque (3) avec une proue (11), une poupe (12) et une hélice (13) à proximité de la poupe, de chaque côté d'une ligne centrale longitudinale au moins une cavité ouverte (4, 5, 6) étant formée au fond (2) de la coque, la cavité étant entourée par deux parois latérales s'étendant dans une direction de la longueur du bateau, une paroi arrière et une paroi avant, la paroi arrière comprenant une partie de paroi en pente inclinée vers le bas, en allant dans une direction vers l'arrière, et un dispositif d'injection d'air (7, 10) pour alimenter la cavité en air, **caractérisé par** un dispositif de contrôle du roulis (83), comprenant un détecteur de roulis, une alimentation en air à commande individuelle pour chaque cavité, lors de l'inclinaison du bateau dans une direction d'inclinaison une cavité étant élevée et une cavité étant abaissée, le détecteur de roulis générant un signal de commande afin d'augmenter l'alimentation en air vers la cavité qui est élevée.

9. Procédé de construction d'un bateau à cavités d'air (1) selon la revendication 1, comprenant les étapes consistant à :
- fournir un bateau (1) avec une coque (3) et un fond (29), et
- raccorder les parois latérales (41, 42) et les parois avant et arrière (43, 44) au fond (29).

10. Procédé pour la construction d'un bateau à cavités d'air (100) comprenant une double coque avec une partie de coque externe (103) et une partie de coque interne (102), une proue et une poupe et une hélice à proximité de la poupe, au moins une cavité ouverte (104, 105) étant formée au fond de la coque, **caractérisé en ce que** :
- la partie de coque externe (103) est au moins partiellement enlevée,
- au moins deux cavités adjacentes dans la direction de la longueur du bateau sont formées, chaque cavité étant entourée par deux parois latérales, une paroi avant et une paroi arrière d'un matériau en forme de plaque, de sorte que la partie de coque interne (102) forme le fond de chaque cavité, et
- un dispositif d'injection d'air est fourni, raccordé aux cavités afin d'alimenter les cavités en air.

11. Procédé selon la revendication 10, dans lequel au moins des parties (106, 109) de la coque externe (103) sont utilisées pour la construction d'une ou de plusieurs des parois latérales et parois avant et arrière des cavités.
